# EUROPEAN PATENT APPLICATION

(11) **EP 3 447 740 A1**
(43) Date of publication of application: **27.02.2019**
(21) Application number: 18190212.3
(22) Date of filing: 22.08.2018
(51) Int. Cl.: G07D 7/12

(54) **INVISIBLE-FEATURE DETECTION DEVICE, SHEET RECOGNITION DEVICE, SHEET HANDLING DEVICE, PRINT INSPECTION DEVICE, AND INVISIBLE-FEATURE DETECTION METHOD**

(30) Priority: 23.08.2017 JP 2017160588
(71) Applicant: Glory Ltd., Hyogo 670-8567 (JP)
(72) Inventor: ADACHI, Kazutaka, Hyogo, 670-8567 (JP); ONISHI, Hiroyuki, Hyogo, 670-8567 (JP); UKAI, Kazutoshi, Hyogo, 670-8567 (JP)
(74) Representative: SSM Sandmair

(57) **Abstract**

The present invention provides an invisible-feature detection device capable of easily detecting a serial number with an invisible feature at low cost, a sheet recognition device, a sheet handling device, a print inspection device, and an invisible-feature detection method.

## Description

### TECHNICAL FIELD

The present invention relates to invisible-feature detection devices, sheet recognition devices, sheet handling devices, print inspection devices, and invisible-feature detection methods. The present invention specifically relates to an invisible-feature detection device for sheet-like printed matter, a sheet recognition device, a sheet handling device, a print inspection device, and an invisible-feature detection method; in particular, an invisible-feature detection device and an invisible-feature detection method suitable for detecting an invisible feature of a serial number portion, a sheet recognition device and a print inspection device including the invisible-feature detection device, and a sheet handling device including the sheet recognition device.

### BACKGROUND ART

The technology of color copy machines, color DTP, and other printing-related fields has been developed and spread rapidly in recent years, and the printing technology has been advanced significantly. This trend has considerably increased the threat of counterfeits of sheet-like printed matter (hereinafter, also referred to simply as sheets) such as banknotes, which has become a serious problem.

In order to deal with this problem, use of inks with an invisible feature, which is a feature invisible to the naked eye, has become common as a technique for preventing counterfeits in sheet printing. Counterfeit sheets can be detected by checking the presence or absence of an invisible feature by a method suitable for the invisible feature of the ink.

Examples of inks with an invisible feature include infrared inks having a characteristic spectral reflectance within the infrared range, fluorescent inks which are excited and emit light when exposed to excitation light such as ultraviolet light, and magnetic inks having a magnetism (magnetic properties) owing to its magnetic material component.

For example, International Patent Application WO 2008/056404 discloses a banknote recognition device including an infrared sensor or a UV sensor, which detects an invisible feature from a pattern printed on a banknote using an ink with an invisible feature and recognizes the authenticity of the banknote.

Japanese patent application JP 2006-205500 A discloses number-printed media such as documents of value printed using an ink which is hardly visible under visible light, such as a fluorescent ink, an infrared-absorptive ink, or an infrared-transmissive ink.

For example, mention may be made of a banknote including serial numbers printed on two left and right positions with the right serial number printed using an infrared-transmissive ink and with the left serial number printed using an infrared-absorptive ink. In this case, the left serial number is not imaged but only the right serial number is imaged when the banknote is irradiated with infrared light and photographed using an imaging device sensitive to the infrared range. This can be used as a feature of a banknote for detecting counterfeit notes.

As mentioned above, inks with an invisible feature are effective as means for preventing sheet counterfeiting. Still, wrong ink can be easily and accidentally supplied in printing of sheets, so that inspection of such supply of wrong ink is also required.

For these sheets prepared using an ink with an invisible feature, however, the print quality in terms of the invisible feature cannot be inspected with the naked eye under room light. Thus, a special technique is required to detect supply of wrong ink during the production steps.

For example, Japanese patent JP 4714847 B discloses a device for monitoring supply of wrong ink to a printer instead of an ink with an invisible feature, wherein the ink is irradiated with infrared light at the ink-supply portion and the reflected light from the ink is detected, and the reflected light is compared with the measurement standard range.

Japanese patent JP 4189777 B discloses a device for inspecting printed matter prepared using an infrared-absorptive ink. The device compares an image of transported printed matter photographed under infrared light and a reference image of correctly printed matter photographed under infrared light in the printing or inspection step, and then determines whether or not the result belongs to an allowable range. The problems to be solved in JP 4189777 B include supply of wrong ink.

Japanese patent JP 5370953 B discloses a method of determining the quality of a printed pattern regarding the area and the shade by irradiating the printed matter with infrared light and preparing an infrared image of the printed pattern, correcting the position to prepare a difference image between the infrared image and an infrared image reference data set, and then comparing the difference image with a determination data set. The problems to be solved in JP 5370953 B include misuse of inks.

Japanese patent application JP 2014-156010 A discloses a printer including a printing unit for printing a serial number and an inspection unit for inspecting the quality of the serial number and the light emission of a seal, wherein the inspection is performed by printing the serial number and the seal on a sheet transported by a printing cylinder (drum). JP 2014-156010 A also discloses that the inspection may be performed using any two types of light among three types of light, i.e., ultraviolet light, infrared light, and visible light.

### SUMMARY OF INVENTION

Unfortunately, it costs high to inspect a serial number with an invisible feature, such as the serial number disclosed in JP 2006-205500 A, using a device such as the banknote recognition device disclosed in WO 2008/056404.

Specifically, in order to detect counterfeit sheets by detecting an invisible feature using a device such as the banknote recognition device disclosed in WO 2008/056404, the invisible feature obtained from a correctly printed sheet is imaged and this image is used as a common reference image in usual cases. This technique is suitable for inspection of a pattern common to the sheets. In contrast, the technique may make an error when a common reference image is used for inspection of portions different among sheets, such as serial numbers. Specifically, if an image obtained from a sheet including a serial number printed thereon is used as a common reference image in this device, the difference in shape of the serial number may be recognized as a difference from the reference image even when the invisible feature at the serial number portion is correct. Thus, if such a technique is intended to be used for inspection of portions different among the sheets, such as serial numbers, reference images need to be prepared for the respective serial numbers. However, preparation of reference images for the respective serial numbers requires much effort and time and causes a need for a large capacity to store the reference images. This therefore increases the costs of both the preparation and the storage device.

Further, with regard to inspection of printing of a serial number with an invisible feature, such as the serial number disclosed in JP 2006-205500 A, the conventional techniques still need improvement as described below.

The technique of JP 4714847 B relates to monitoring during ink supply, and does not inspect the printed results. In some cases, serial numbers of sheets are printed using an invisible ink. Still, JP 4714847 B fails to disclose inspection of an invisible feature of serial number portions of sheets.

In JP 4189777 B, an image obtained by irradiating correctly printed matter with infrared light is used as a common reference image in the inspection of reflection and absorption within the infrared range. Similar to the case of WO 2008/056404, this technique is suitable for inspection of a pattern common to the printed matter. In contrast, the technique may make an error when a common reference image is used for inspection of portions different among the printed materials, such as serial numbers. Specifically, if an image obtained from a sheet including a serial number printed thereon is used as a common reference image in this device, the difference in shape of the serial number may be recognized as a difference from the reference image even when the reflection or absorption within the infrared range at the serial number portion is correct. Thus, if such a technique is used for inspection of portions different among the sheets, such as serial numbers, reference images need to be prepared for the respective serial numbers. However, preparation of reference images for the respective serial numbers requires much effort and time and causes a need for a large capacity for storage of the reference images. This therefore increases the costs of both the preparation and the storage device.

In JP 5370953 B, similar to JP 4189777 B, if the serial number of printed matter to be inspected is different from the serial number of an infrared image reference data set, a large difference is generated in the difference image, which may cause a determination error. Thus, the same problem as in JP 4189777 B occurs if infrared image reference data sets are prepared for the respective serial numbers.

JP 2014-156010 A discloses no specific technique for inspecting a serial number using ultraviolet light or infrared light.

The present invention is devised in view of the above state of the art, and aims to provide an invisible-feature detection device capable of easily detecting a serial number with an invisible feature at low cost, a sheet recognition device, a sheet handling device, a print inspection device, and an invisible-feature detection method.

One aspect of the present invention is directed to an invisible-feature detection device configured to detect an invisible feature of a serial number printed on a sheet, the invisible-feature detection device including: a detection unit configured to detect the invisible feature from the sheet; a memory unit configured to store a reference data set; and a determination unit configured: to compare a detected data set based on the invisible feature of the sheet detected by the detection unit with the reference data set; and to determine that the serial number with the invisible feature is printed on the sheet when a difference is present between the detected data set and the reference data set in an area corresponding to a detection-target area of the sheet, the detection-target area including the serial number printed therein, wherein the reference data set is based on a reference invisible feature detected from a reference sheet including a printed pattern at least excluding the serial number with the invisible feature.

In another aspect of the present invention, the invisible feature may be an infrared absorption.

In another aspect of the present invention, the invisible feature may be a fluorescence emission or a phosphorescence emission.

In another aspect of the present invention, the invisible feature may be a magnetism.

In another aspect of the present invention, the invisible feature may be invisible under light within the visible light range, and the detection device has a detection range sensitive to the invisible feature.

In another aspect of the present invention, the reference sheet may include the printed pattern with the reference invisible feature.

Another aspect of the present invention is directed to a sheet recognition device including the above invisible-feature detection device, wherein the sheet recognition device is configured to recognize a sheet and determine the authenticity of the sheet based upon a determination result from the determination unit.

Another aspect of the present invention is directed to a sheet handling device including the above sheet recognition device.

In another aspect of the present invention, the sheet may be an uncut sheet including a plurality of piece faces arranged thereon.

In another aspect of the present invention, the reference data set may be a reference data set of a piece face of the plurality of piece faces.

In another aspect of the present invention, each piece face may include a plurality of serial numbers printed in a plurality of locations thereon, the plurality of serial numbers of each piece face being the same or different serial numbers, and each piece face may include at least one detection-target area for areas each including the serial number printed therein within the uncut sheet.

In another aspect of the present invention, the plurality of piece faces may include different serial numbers, and the plurality of serial numbers of each piece face may be the same serial numbers.

In another aspect of the present invention, the invisible feature of the serial number may be detected on at least one of the piece faces.

Another aspect of the present invention is directed to a print inspection device including the above invisible-feature detection device, wherein the print inspection device is configured to inspect whether or not a serial number is printed correctly on a sheet based upon a determination result from the determination unit.

Another aspect of the present invention is directed to an invisible-feature detection method of detecting an invisible feature of a serial number printed on a sheet, the method including: preparing a reference data set based on a reference invisible feature detected from a reference sheet including a printed pattern at least excluding a serial number with the invisible feature; detecting the invisible feature from the sheet; and comparing a detected data set based on the invisible feature of the sheet detected by the detecting with the reference data set to determine that the serial number with the invisible feature is printed on the sheet when a difference is present between the reference data set and the detected data set in an area corresponding to a detection-target area of the sheet, the detection-target area including the serial number printed therein.

The invisible-feature detection device and the invisible-feature detection method of the present invention enable easy, low-cost detection of a serial number with an invisible feature.

Since the sheet recognition device of the present invention includes the invisible-feature detection device of the present invention, it enables easy, low-cost recognition (type determination) and/or authenticity determination of a sheet including a serial number with an invisible feature printed thereon.

Since the sheet handling device of the present invention includes the sheet recognition device of the present invention, it enables easy, low-cost recognition (type determination) and/or authenticity determination of a sheet including a serial number with an invisible feature printed thereon.

Since the print inspection device of the present invention includes the invisible-feature detection device of the present invention, it enables easy, low-cost inspection of whether or not a serial number with an invisible feature is printed correctly.

### BRIEF DESCRIPTION OF DRAWINGS

Fig. 1 is a schematic plan view of an example of an uncut banknote sheet to be inspected by a print inspection device according to Embodiment 1.
Fig. 2 is a schematic plan view of a piece face of the uncut banknote sheet shown in Fig. 1.
Fig. 3 includes schematic plan views of images of a piece face of the uncut banknote sheet shown in Fig. 1; Fig. 3(a) is a visible light image and Fig. 3(b) is an infrared image.
Fig. 4 is a block diagram of an internal structure of the print inspection device according to Embodiment 1.
Fig. 5 is a schematic side view of the print inspection device according to Embodiment 1.
Fig. 6 is a schematic plan view of an example of a reference uncut banknote sheet (piece face) to be used in an invisible-feature detection device according to Embodiment 1.
Fig. 7 is a schematic plan view of an image of a piece face cut out of an infrared image of the reference uncut banknote sheet shown in Fig. 6.
Fig. 8 is a schematic plan view of an infrared image of a piece face of the uncut banknote sheet shown in Fig. 1 using the invisible-feature detection device according to Embodiment 1.
Fig. 9 is a flowchart of the process of an invisible-feature detection method according to Embodiment 1.
Fig. 10 is a schematic side view of a print inspection device according to a variation.

### DESCRIPTION OF EMBODIMENTS

Preferred embodiments of the invisible-feature detection device, the sheet recognition device, the sheet handling device, the print inspection device, and the invisible-feature detection method according to the present invention are described hereinbelow with reference to the drawings. The present invention enables detection of an invisible feature from a transported sheet using an appropriate sensor and comparison between the data set of the intensity detected by the sensor and a reference data set. Thus, the present invention can be achieved by the devices mentioned in the background art section, such as sheet recognition devices, typified by banknote recognition units, and print inspection devices. In the following, a print inspection device is mainly described as an example in which a sheet to be inspected may have various forms.

Examples of a sheet to be a target of the present invention include printed matter (hereinafter, also referred to as pieces) including a serial number (characteristic number) printed thereon, such as banknotes (printed money), cheques, gift vouchers, bills, slips, documents of value, and card-like media, and uncut printed matter including a plurality of any of such pieces printed thereon. A base material for the sheet to be a target of the present invention is usually paper made of vegetable fibers. Still, in order to improve the properties such as durability, water resistance, and security, paper made of synthetic fibers or a polymer sheet made of synthetic resin may be used. Banknotes made of polymer sheets are called polymer banknotes. The following describes the present invention taking a device and method for banknotes as examples.

In general, banknotes are printed in the form of uncut sheets of banknotes so as to print a plurality of banknotes at the same time. Before completion of the banknotes, there are steps of: printing patterns common to a plurality of banknotes; inspecting the print quality of the patterns; printing serial numbers different among the banknotes; inspecting the print quality of the serial numbers; cutting the uncut sheets into the individual banknotes; and inspecting the cut banknotes (pieces). The following describes inspection of the serial number portions according to the present invention. The present invention can be applied to both inspection of serial numbers on uncut sheets and inspection of serial numbers on pieces.

Printing of serial numbers and inspection of the print quality of the serial numbers according to the present invention may be performed using the same device or using different devices. For example, these steps may be performed with a device including a printing unit for printing serial numbers and an inspection unit for inspecting the quality of the serial numbers, such as the printer disclosed in JP 2014-156010 A. Alternatively, an inspection device without a printing unit may also be used.

The following describes the present invention taking as an example a serial number printing device for uncut sheets including a printing unit and an inspection device; in particular a print inspection device thereof for inspecting the print quality of the serial numbers.

(Embodiment 1) A print inspection device according to the present embodiment is an inspection device for uncut banknote sheets including a plurality of pieces (banknotes) formed by printing and arranged vertically and horizontally, and is placed in a serial number printing device for uncut banknote sheets. The print inspection device successively takes a visible light image and an infrared image of an uncut banknote sheet held on the surface of a drum of the serial number printing device, and compares the serial number portions of the visible light image and of the infrared image respectively with reference images for the visible light image and for the infrared image.

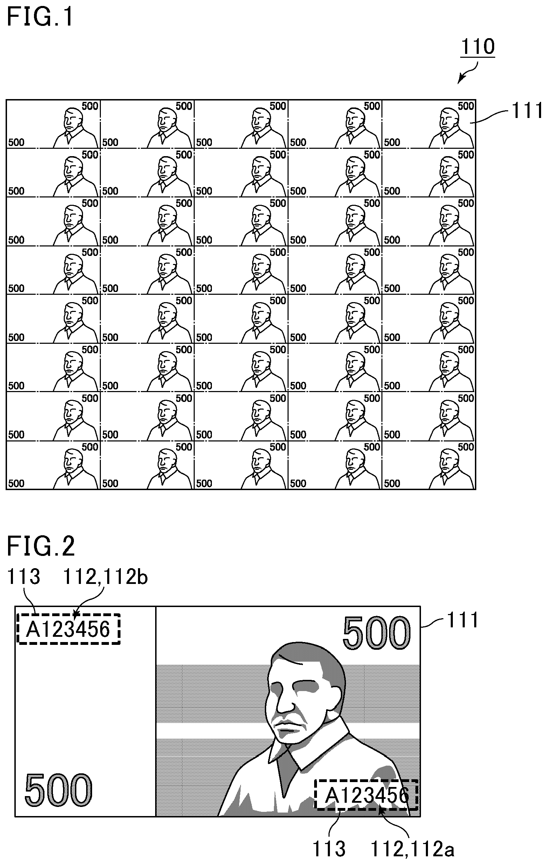

As illustrated in Fig. 1, an uncut banknote sheet 110 to be inspected by the print inspection device according to the present embodiment is uncut printed matter including a plurality of piece faces (banknote faces) 111 printed vertically and horizontally. As illustrated in Fig. 2, each piece face 111 includes a plurality of serial numbers 112 printed in a plurality of (e.g., two) locations thereon using the serial number printing device. A serial number, including the serial numbers 112, is a characteristic number for distinguishing one banknote from another, and consists of symbols such as letters and digits. Each serial number has information of the symbols themselves and information of colors of these symbols, and these pieces of the information enable distinction among the banknotes. Although the serial numbers 112 of each piece face 111 may be different serial numbers (include different sets of symbols), they are usually the same serial numbers (include the same sets of symbols in the same order). In an appropriately printed uncut banknote sheet 110, the piece faces 111 usually include different serial numbers (different sets of symbols). If the serial numbers 112 are inappropriately printed, for example, at least one serial number (at least one set of symbols) of at least one piece face 111 may be the same as at least one serial number (at least one set of symbols) of a different piece face 111. A serial number 112 in one location (a serial number 112a) is printed using an infrared-absorptive ink and a serial number 112 in another location (a serial number 112b) is printed using an infrared-transmissive ink. The serial numbers 112a and 112b each absorb light having a wavelength band within at least part of the visible light range (e.g., 380 to 780 nm). The serial number 112a also absorbs light having a wavelength band within at least part of the infrared range (e.g., a wavelength band exceeding 780 nm), while the serial number 112b transmits light within the infrared range (e.g., a wavelength band exceeding 780 nm). Thus, both the serial numbers 112a and 112b are visible under visible light, and the serial number 112a is also detectable under infrared light, while the serial number 112b is not detectable under infrared light.

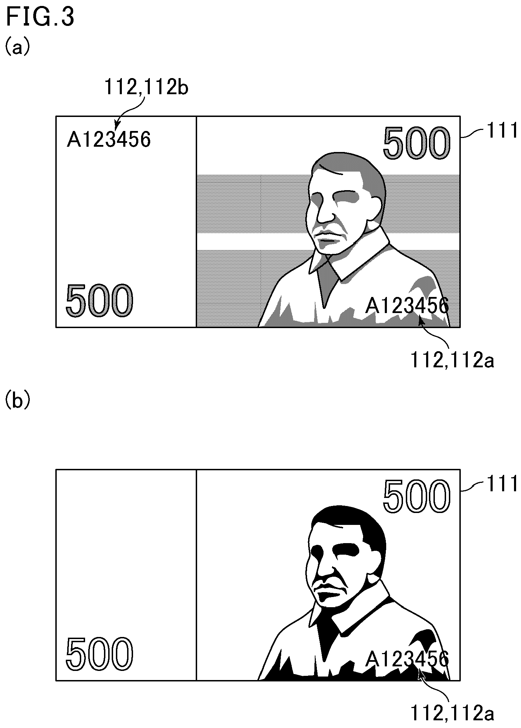

As illustrated in Fig. 3(a), in a visible light image of the uncut banknote sheet 110, each piece face includes both the serial numbers 112a and 112b. Thus, the print quality of the serial numbers 112a and 112b, such as the presence or absence of shears and blurs, can be inspected using the visible light image. However, the invisible features of the serial numbers 112 cannot be detected using the visible light image. Thus, the print inspection device according to the present embodiment is configured to take an infrared image of the serial numbers 112. As illustrated in Fig. 3(b), in an infrared image of the uncut banknote sheet 110, each piece face includes the serial number 112a because the serial number 112a absorbs infrared light, but does not include the serial number 112b because the serial number 112b transmits infrared light. In the present embodiment, an infrared image is used to enable easy, low-cost detection of the presence or absence of the invisible features, particularly an infrared absorption, of the serial numbers 112.

The terms "visible light image" and "infrared image" as used herein mean images generated by visible light or infrared light applied to and reflected on the surface of a target to be imaged.

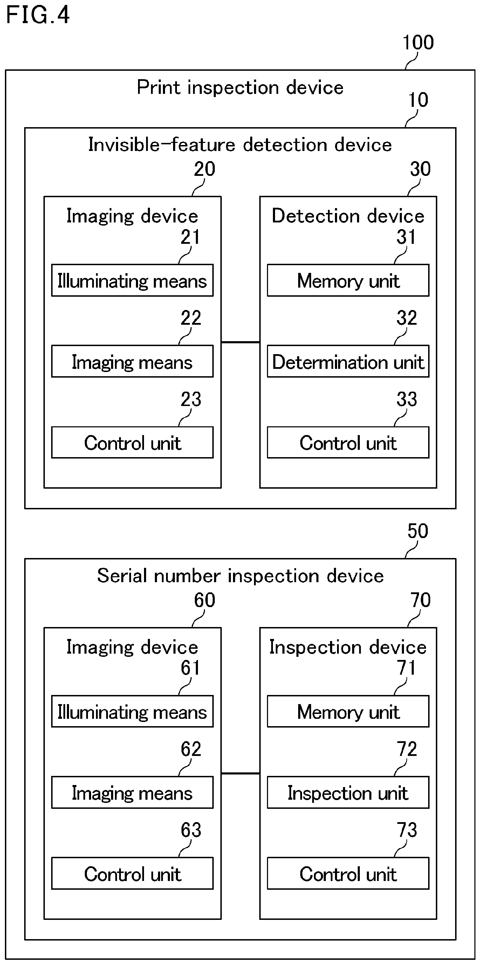

As illustrated in Fig. 4, the print inspection device 100 according to present embodiment includes an invisible-feature detection device 10 configured to detect the invisible feature, particularly an infrared absorption, of the serial numbers 112, and a serial number inspection device 50 configured to inspect the print quality of the serial numbers 112.

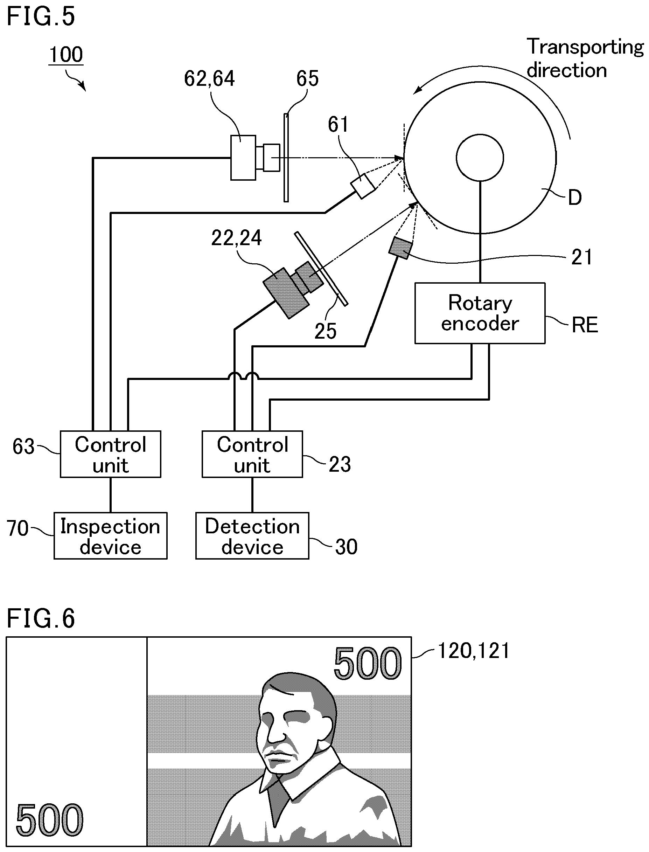

The serial number inspection device 50 includes an imaging device 60 and an inspection device 70. As illustrated in Fig. 5, the imaging device 60 includes an illuminating means 61 configured to irradiate the uncut banknote sheet 110 on a drum D of the serial number printing device with visible light, such as white light; an imaging means 62 configured to scan the uncut banknote sheet 110 illuminated by the illuminating means 61 to generate a visible light image; and a control unit 63 configured to control the illuminating means 61 and the imaging means 62.

As illustrated in Fig. 4, the inspection device 70 includes a memory unit 71 configured to store reference visible light images prepared for the respective piece faces 111, i.e., the respective serial numbers 112, to be printed; an inspection unit 72 configured to compare each serial number 112 on a visible light image of a piece face 111 imaged using the imaging device 60 and the serial number on the corresponding reference visible light image for the piece face 111 to inspect whether or not the serial number 112 is correct and any omission is present, as well as to inspect the print quality, such as the presence or absence of shears, blurs, stains, and chips, and to inspect the thickness; and a control unit 73 configured to output the inspection results from the inspection unit 72 to one or more higher-level devices, i.e., the print inspection device 100 and/or the serial number printing device.

The invisible-feature detection device 10 includes an imaging device 20 as a detection unit (detection device) configured to detect an invisible feature from the uncut banknote sheet 110; and a detection device 30. As illustrated in Fig. 5, the imaging device 20 includes an illuminating means 21 configured to irradiate the uncut banknote sheet 110 on the drum D of the serial number printing device with infrared light; an imaging means 22 configured to scan the uncut banknote sheet 110 illuminated by the illuminating means 21 to generate an infrared image; and a control unit 23 configured to control the illuminating means 21 and the imaging means 22.

The drum D includes on the cylinder portion thereof a supporting mechanism (not illustrated) configured to support the uncut banknote sheet 110, and is controlled by the serial number printing device so as to rotate at a predetermined speed.

The illuminating means 21 may emit light in various ranges including the infrared range, or may emit only light in the infrared range.

Each of the imaging means 22 and 62 is disposed such that the optical axis thereof is oriented to the center of rotation of the drum D (the direction normal to the outer circumferential surface of the drum D). Still, these optical axes may be inclined from the normal direction. The imaging means 22 and 62 respectively include line scan cameras 24 and 64. Each of the line scan cameras 24 and 64 is disposed such that the imaging line of the light-receiving elements is parallel to the axis of rotation of the drum D, and is disposed at a predetermined distance from the drum D so as to image the whole width of the uncut banknote sheet 110 at one time.

A visible-light cut filter 25 and an infrared cut filter 65 are respectively disposed in front of the line scan cameras 24 and 64, and prevent incidence of the infrared light from the illuminating means 21 on the line scan camera 64 for a visible light image and prevent incidence of the visible light from the illuminating means 61 on the line scan camera 24 for an infrared image.

Instead of the infrared cut filter 65 and the visible-light cut filter 25, a partition plate may be disposed between the illuminating means 21 and 61.

Also, instead of the line scan camera 64, the infrared cut filter 65, and the illuminating means 61, an optical line sensor may be disposed which is a combination of light-receiving elements, a rod lens array, and a visible light source. Similarly, instead of the line scan camera 24, the visible-light cut filter 25, and the illuminating means 21, an optical line sensor may be disposed which is a combination of light-receiving elements, a rod lens array, and an infrared light source. In these cases, such an optical line sensor (contact imaging device) may be disposed for each line of the piece faces 111.

The imaging means 22 and 62 respectively include light-receiving elements capable of detecting at least visible light and light-receiving elements capable of detecting at least infrared light. These light-receiving elements may be optical detectors such as photodiodes or phototransistors. In the case of using the illuminating means 21 configured to emit light in various ranges including the infrared range, the light-receiving elements of the imaging means 22 may each include a filter that cuts light in ranges other than the infrared range, or may be composed of an IR sensor whose detection wavelength is within the infrared range. In the case of using the illuminating means 21 configured to emit only light in the infrared range, the light-receiving elements of the imaging means 22 have only to be capable of detecting at least infrared light.

The illuminating means 61 and the imaging means 62 are disposed upstream the illuminating means 21 and the imaging means 22 in the direction of transporting the uncut banknote sheet 110, and this configuration allows the invisible-feature detection device 10 to utilize the information from the serial number inspection device 50, such as the information about the positions of the piece faces 111.

The control unit 23 controls the imaging timing of the imaging means 22 in accordance with the amount of rotation of the drum D. Imaging of each line by the imaging means 22 may be synchronous with a clock output from a rotary encoder RE provided for the drum D in accordance with the amount of rotation of the drum D, or may be synchronous with the master clock of the serial number printing device that controls rotation of the drum D.

The control unit 23 outputs an infrared image of the uncut banknote sheet 110 obtained from the imaging means 22 to the detection device 30 as a detection data set based on the invisible features of the uncut banknote sheet 110 detected by the detection unit. The data set may be output for each line imaged, or the data sets for the respective lines imaged may be gathered so that the data set of the whole uncut banknote sheet 110 may be output.

Similar to the control unit 23, the control unit 63 controls the imaging timing of the imaging means 62 and outputs a visible light image obtained from the imaging means 62 to the inspection device 70.

As illustrated in Fig. 4, the detection device 30 includes a memory unit 31, determination unit 32, and a control unit 33.

The memory unit 31 stores reference infrared images as reference data sets based on the infrared absorption detected from a reference uncut banknote sheet serving as a reference sheet.

As illustrated in Fig. 6, a reference uncut banknote sheet 120 includes piece faces (banknote faces) 121 each including a printed pattern excluding the serial numbers 112, and is substantially the same as the correct uncut banknote sheet 110 except that the serial numbers 112 are not printed. For the uncut banknote sheet 110, all the patterns common to the piece faces 111 are printed before the serial numbers 112 different among the piece faces 111 are printed. The reference uncut banknote sheet 120 corresponds to the uncut banknote sheet 110 immediately before this step of printing the serial numbers.

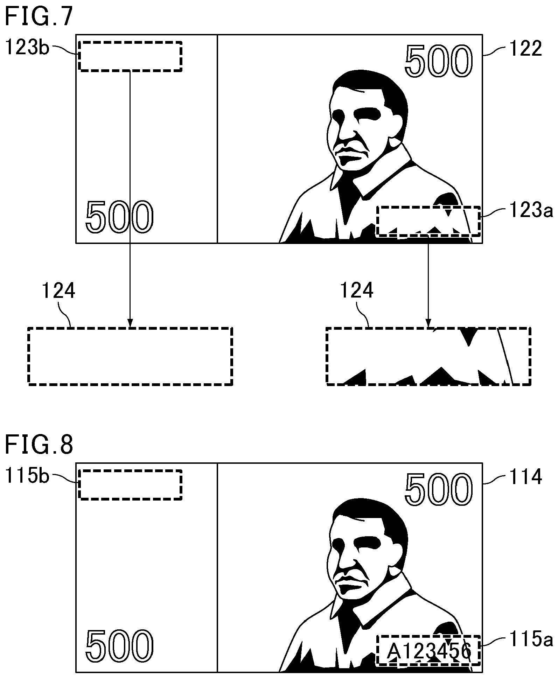

As illustrated in Fig. 2, the uncut banknote sheet 110 (each piece face 111) including the serial numbers 112 printed thereon includes detection-target areas 113 which are the targets of detecting the serial numbers 112, i.e., areas including the respective serial numbers 112 printed thereon (e.g., rectangular areas surrounding the respective serial numbers 112). The reference infrared images are infrared images of the areas of the reference uncut banknote sheet 120 corresponding to the detection-target areas 113 of the uncut banknote sheet 110 (each piece face 111), and are prepared as follows. First, similar to typical inspection of the uncut banknote sheet 110, the whole face of the reference uncut banknote sheet 120 is imaged using the imaging device 20 while the reference uncut banknote sheet 120 is transported on the drum D. Then, as illustrated in Fig. 7, an image 122 of each piece face is cut out of the whole image (infrared image) and any one image is selected. The reference uncut banknote sheet 120 may include printed patterns with an infrared absorption excluding the serial numbers 112a. As illustrated in Fig. 7, the image 122 of the piece face selected may include a pattern with an infrared absorption. Next, an area 123a corresponding to the detection-target area 113 including the serial number 112a printed thereon and an area 123b corresponding to the detection-target area 113 including the serial number 112b printed thereon are cut out of the image 122 of the piece face selected, and both of the images are stored in the memory unit 31 as reference infrared images 124 (reference data sets) of the piece face.

At least one of the areas 123a and 123b may include a pattern with an infrared absorption other than the serial number 112a. For example, the area 123a (a reference infrared image 124) corresponding to the detection-target area 113 including the serial number 112a printed thereon may include a pattern with an infrared absorption.

Since the serial number 112b is printed using an infrared-transmissive ink and is not imaged in an infrared image, the reference uncut banknote sheet 120 does not include the serial numbers 112a printed thereon but may include the serial numbers 112b printed thereon.

As illustrated in Fig. 8, the memory unit 31 stores an infrared image (hereinafter, referred to as input infrared image) 114, imaged by the imaging device 20, of the uncut banknote sheet 110 to be detected. An image data set for each line imaged by the imaging means 22 may be stored successively, or an image data set of the whole uncut banknote sheet 110 imaged by the imaging means 22 may be stored.

The determination unit 32 first aligns the input infrared image 114. The alignment may be performed with a reference pattern (e.g., a specific pattern portion with an infrared absorption) of the input infrared image 114, or may be performed with a reference pattern of a visible light image (e.g., a specific pattern portion with a visible feature) of the uncut banknote sheet 110 imaged by the imaging device 60.

Next, as illustrated in Fig. 8, the determination unit 32 specifies areas 115a and 115b of each piece face of the input infrared image 114 corresponding to the detection-target areas 113 of the uncut banknote sheet 110 (each piece face 111). The determination unit 32 then compares the area 115a of each piece face of the input infrared image 114 with the corresponding reference infrared image 124 (the area 123a of the image 122 of the piece face), and extracts the difference between the images. Similarly, The determination unit 32 compares the area 115b of each piece face of the input infrared image 114 with the corresponding reference infrared image 124 (the area 123b of the image 122 of the piece face), and extracts the difference between the images.

The determination unit 32 then determines whether or not the serial numbers 112a and 112b are appropriately printed on the uncut banknote sheet 110 which is a detection target. Specifically, the area 115a (the area corresponding to the detection-target area 113 including the serial number 112a printed thereon) of each piece face of the input infrared image 114 is compared with the corresponding reference infrared image 124 (the area 123a of the image 122 of the piece face) by an image matching technique, and the degree of similarity between these areas is calculated for each area 115a. If the calculated degree of similarity is lower than a predetermined threshold value, the corresponding serial number 112a of the uncut banknote sheet 110 as a detection target is determined as having an invisible feature, i.e., being printed using an infrared-absorptive ink (correct). If the calculated degree of similarity is not lower than the predetermined threshold value, the corresponding serial number 112a of the uncut banknote sheet 110 as a detection target is determined as having no invisible feature, i.e., not being correctly printed using an infrared-absorptive ink (incorrect).

Also, the area 115b (the area corresponding to the detection-target area 113 including the serial number 112b printed thereon) of each piece face of the input infrared image 114 is compared with the corresponding reference infrared image 124 (the area 123b of the image 122 of the piece face) by an image matching technique, and the degree of similarity between these areas is calculated for each area 115b. If the calculated degree of similarity is not lower than a predetermined threshold value, the corresponding serial number 112b of the uncut banknote sheet 110 as a detection target is determined as having no invisible feature, i.e., being printed using an infrared-transmissive ink (correct). If the calculated degree of similarity is lower than the predetermined threshold value, the corresponding serial number 112b of the uncut banknote sheet 110 as a detection target is determined as having an invisible feature, i.e., not being printed using an infrared-transmissive ink (incorrect).

Then, the control unit 33 outputs a determination result from the determination unit 32 to the print inspection device 100 and/or the serial number printing device which are higher-level devices.

The print inspection device 100 inspects whether or not the serial numbers 112 of the uncut banknote sheet 110 are printed correctly based upon the determination result from the determination unit 32.

Hereinabove, the reference infrared images 124 serving as reference data sets are prepared by cutting the areas 123a and 123b corresponding to the detection-target areas 113 out of the image 122 of a piece face. Alternatively, the image 122 of a piece face itself may be used as a single reference infrared image 124 of a piece face. Still alternatively, a reference infrared image 124 of an uncut sheet may be used instead of the reference infrared image 124 of a piece face, and the difference may be extracted in each area corresponding to the detection-target area 113 for each piece face based on the reference infrared image 124 of an uncut sheet and the input infrared image 114 (the infrared image of the uncut banknote sheet 110 as a detection target).

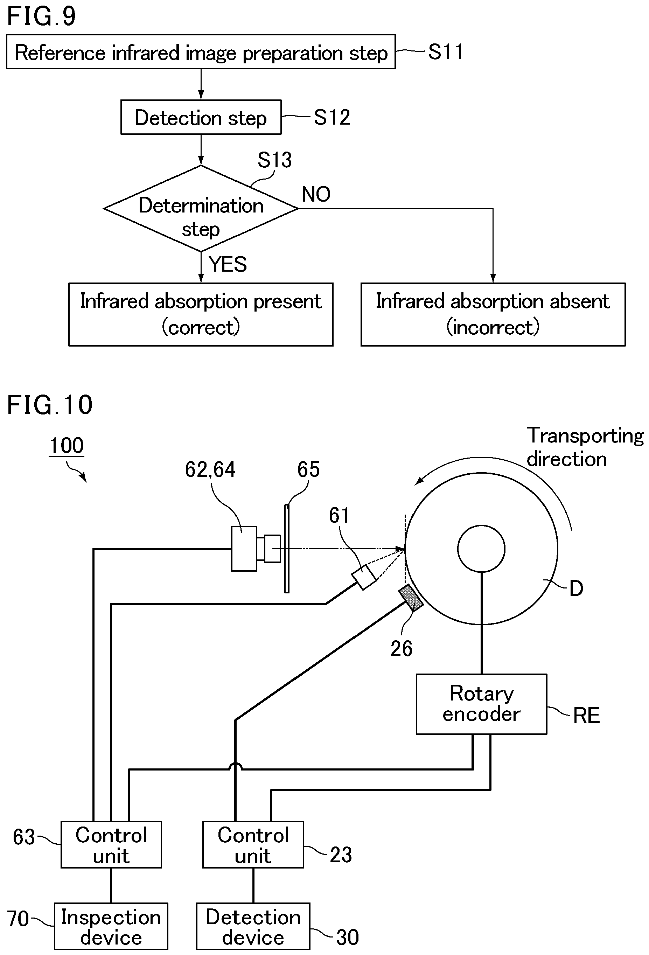

Next, the process of the invisible-feature detection method according to the present embodiment is described with reference to Fig. 9.

First, as described above, the reference uncut banknote sheet 120 (reference sheet) is prepared including printed patterns at least excluding the serial numbers 112a with an infrared absorption, and reference infrared images 124 (reference data sets) based on the infrared absorption detected from the reference uncut banknote sheet 120 are prepared (reference infrared image preparation step S11).

Detection of the infrared absorption from the reference uncut banknote sheet 120 can be efficiently performed using the imaging device 20 of the invisible-feature detection device 10 as described above. Still, another imaging device may be used.

Then, the infrared absorption is detected from the uncut banknote sheet 110 as a detection target (detection step S12). This detection is performed using the imaging device 20 of the invisible-feature detection device 10.

Then, as described above, the infrared image (detected data set) of the uncut banknote sheet 110 detected in the detection step S12 is compared with the corresponding reference infrared image 124. When a difference is present between the detected image and the reference image (the detected data set and the reference data set) in an area corresponding to a detection-target area, which includes the serial number 112a printed therein, of the uncut banknote sheet 110, the corresponding serial number 112a with an infrared absorption is determined as being printed on the uncut banknote sheet 110 (determination step S13: Yes). When no difference is present between the detected image and the reference image (the detected data set and the reference data set) in an area corresponding to a detection-target area, which includes the serial number 112a printed therein, of the uncut banknote sheet 110 in the determination step S12, the corresponding serial number 112a with an infrared absorption is determined as not being printed on the uncut banknote sheet 110 (determination step S13: No).

As described above, in the above embodiment, the reference infrared image 124 (reference data set) is used which are based on the infrared absorption detected from the reference uncut banknote sheet 120 (reference sheet) including printed patterns at least excluding the serial numbers 112a with an infrared absorption. Further, the input infrared image 114 (detected data set) based on the infrared absorption of the uncut banknote sheet 110 detected by the imaging device 20 (detection unit) is compared with the reference infrared image 124, and when a difference is present between the detected image and the reference image (the detected data set and the reference data set) in an area corresponding to a detection-target area, which includes the serial number 112a printed therein, of the uncut banknote sheet 110, the corresponding serial number 112a with an infrared absorption is determined as being printed on the uncut banknote sheet 110. This eliminates the need for preparing reference images for the respective different serial numbers 112a. Thus, preparation of the reference infrared images 124 does not require much effort and time and the memory unit 31 requires only a small capacity for storage of the reference infrared images 124, so that the cost of the storage unit for the memory unit 31 can be reduced. This therefore enables easy, low-cost detection of the serial numbers 112a with an infrared absorption.

In the above embodiment, the detection-target area 113 is set for each area including the serial number 112 printed therein. Thus, even when the serial number 112a printed using an infrared-absorptive ink and the serial number 112b printed using an infrared-transmissive ink are prepared as the serial numbers 112, the presence or absence of an infrared absorption of the serial numbers 112a and 112b can be determined. This enables easy detection of reverse supply between the ink for the serial numbers 112a and the ink for the serial numbers 112b.

In the above embodiment, the reference uncut banknote sheet 120 includes printed patterns with an infrared absorption other than the serial numbers 112a. Even in this case, the above comparison and determination using the reference infrared image 124 can detect the presence or absence of the serial numbers 112a with an infrared absorption at high accuracy. Specifically, when the reference uncut banknote sheet 120 includes printed patterns with an infrared absorption, in other words, the uncut banknote sheet 110 as a detection target also includes printed patterns with an infrared absorption in addition to the serial numbers 112a, as illustrated in Fig. 8, a region (e.g., the area 115a) corresponding to the detection-target area 113 of the input infrared image 114 may include a pattern with an infrared absorption in addition to the serial number 112a, in some cases. In this case, the presence or absence of the serial number 112a is difficult to detect at high accuracy from the input infrared image 114 alone, for example, from the concentration histogram of the pixels of the area. As illustrated in Fig. 7, however, the reference infrared image 124 includes a pattern with an infrared absorption other than the serial number 112a. Thus, the reference infrared image 124 and the input infrared image 114 can be compared while the influence of the pattern with an infrared absorption other than the serial number 112a is removed or reduced. Therefore, even in the above case, the presence or absence of the serial number 112a can be detected at high accuracy.

(Variations) In the above embodiment, the degree of similarity is calculated from the input infrared image 114 and the reference infrared images 124 by an image matching technique and is compared with the threshold value. Alternatively, the infrared image of the uncut banknote sheet 110 as a detection target may be compared with the infrared image of the reference uncut banknote sheet 120 as a comparison target by any of the following techniques (1) to (3).
(1) The differences between data sets (e.g., pixel values) at the position corresponding to the detection-target area 113 including a serial number 112 printed therein are calculated, and the sum of the absolute values of the differences of the whole detection-target area 113 is compared with a threshold value.
(2) The number of pixels is counted where the difference between data sets (e.g., pixel values) at the position corresponding to the detection-target area 113 including the serial number 112 printed therein is greater than a threshold value, and this count is compared with a different threshold value.
(3) The data sets of both of the paired infrared images are input to a pre-trained machine learning model, and this machine learning model outputs whether the data sets match with each other or not.

In the above embodiment, the infrared image of the uncut banknote sheet 110 as a detection target is compared with the infrared image of the reference uncut banknote sheet 120 as a comparison target in the areas corresponding to the detection-target areas 113 of the uncut banknote sheet 110 including the serial numbers 112 printed thereon. In other words, the partial images of the respective uncut banknote sheet images are compared. Alternatively, the whole uncut banknote sheet images may be compared to determine the difference between the data sets in the areas corresponding to the detection-target areas 113.

In the above embodiment, the case is described where the presence or absence of an infrared absorption is determined for the respective serial numbers 112a and 112b of each piece face 111 of the uncut banknote sheet 110 as a detection target. Alternatively, the presence or absence of an infrared absorption of the respective serial numbers 112a and 112b may be determined for the serial numbers 112a and 112b of any one piece face 111 of the uncut banknote sheet 110. The piece faces 111 of the uncut banknote sheet 110 are usually printed using the same ink. Thus, reverse supply between the ink for the serial numbers 112a and the ink for the serial numbers 112b can be detected even in this case.

In the above embodiment, the reference infrared images 124 are prepared from the infrared image of one piece face of one reference uncut banknote sheet 120. Still, if the printing results are different among a plurality of reference uncut banknote sheets 120 (uncut banknote sheets 110), the reference infrared images 124 may be prepared from the average of the infrared images of a plurality of piece faces of a plurality of reference uncut banknote sheets 120.

In the above embodiment, an infrared-transmissive ink is used. Alternatively, an infrared-reflective ink may be used.

In the above embodiment, a reflective image (infrared image) generated by the reflected infrared light from the imaging target is used. Without any influence of the back side, a transmissive image may be used which is generated by the transmitted infrared light through the imaging target.

In the above embodiment, the case is described where the invisible feature is an infrared absorption. Alternatively, the invisible feature may be a fluorescence emission, a phosphorescence emission, or a magnetism, for example.

In the case where the invisible feature is a fluorescence emission or a phosphorescence emission, the serial number 112a is printed using an ink containing a fluorescent material or a phosphorescent material and excitation light, such as ultraviolet light, is applied to the uncut banknote sheet 110 from the illuminating means 21. Thereby, the serial number 112a produces fluorescence or phosphorescence owing to the applied excitation light.

Fluorescence and phosphorescence are both emitted light caused by photoluminescence, and the wavelength of emitted light is usually different from the wavelength of excitation light. In the case of fluorescence, down conversion occurs in many, but not all cases; down conversion generates emitted light with a low frequency by excitation light with a high frequency, such as ultraviolet light. The fluorescence and phosphorescence are visible light in some cases and infrared light in other cases, and thus are not necessarily within the visible light wavelength. Accordingly, when the serial number 112a produces a fluorescence emission or a phosphorescence emission outside the visible light range, such an emission cannot be observed by the naked eye. When the serial number 112a produces a fluorescence emission or a phosphorescence emission by excitation light with a wavelength outside the visible light range, an emission does not occur under light within the visible light range, and thus cannot be observed by the naked eye. When the serial number 112a produces a fluorescence emission or a phosphorescence emission within the visible light range, such an emission cannot be usually observed by the naked eye under sunlight or white light for indoor lighting because such light causes intensive reflected light and fluorescence and phosphorescence (in particular, phosphorescence) are inconspicuous in many cases. Therefore, in each case, the emission is invisible in the usage environment under lighting within a common visible light range, such as under sunlight or white light for indoor lighting. Here, the image sensing means 22, a detection unit for fluorescence or phosphorescence, used is one having sensitivity to the wavelength range of fluorescent color or phosphorescent color.

The phrase "emitted light caused by photoluminescence" as used herein includes, as described above, both fluorescence (fluorescence in a narrow sense) which has a short (substantially no) emission lifetime after the excitation light (light for excitation) is stopped and phosphorescence which has a long lifetime and produces long-lasting emission. In consideration of such phosphorescence characteristics, the illuminating means 21 (excitation source) needs to be placed slightly upstream when the invisible feature is a phosphorescence emission.

In this case, the serial number 112b may be printed using a non-fluorescent ink, and an ultraviolet cut filter may be placed instead of the infrared cut filter 65 in front of the line scan camera 64.

In the case where the invisible feature is a magnetism, the serial number 112a is printed using an ink containing a magnetic material. Then, as illustrated in Fig. 10, the imaging means 22 used is a magnetic line sensor 26 which is a detection device configured to detect and output the intensity of a magnetism. The magnetic line sensor 26 is disposed for each line of the piece faces 111 of the uncut banknote sheet 110, and each magnetic line sensor 26 includes a plurality of magnetic sensor elements disposed in line.

In this case, the illuminating means 21 and the infrared cut filter 65 need not to be disposed.

In the present invention, as described above, an invisible feature such as an infrared absorption, a fluorescence emission, a phosphorescence emission, or a magnetism can be detected from a transported sheet using an appropriate sensor, the data set of the intensity detected by the sensor can be compared with the reference data set, and the reference data set characterizes the invention. Therefore, the invisible feature is not limited to the above features and may be any feature which is invisible by the naked eye under visible light (i.e., in a usual usage environment) and can be detected using a detection device (sensor) having a detection range sensitive to the invisible feature.

In the above embodiment, what is described is a case where the sheet is the uncut banknote sheet 110 including a plurality of piece faces 111 arranged vertically and horizontally. Alternatively, the sheet may include only one piece face 111 thereon, and the invisible-feature detection device 10 may detect the invisible feature of the serial number 112a on each sheet one by one.

In this case, the sheet may be one cut out of the uncut banknote sheet 110 with printed patterns, or may be one prepared by printing a pattern on a base material originally having the size of a piece face.

Also, in this case, the invisible-feature detection device 10 is suitable for a banknote recognition device, and the banknote recognition device may determine the authenticity of the banknotes based upon the determination result from the determination unit 32. In this case, the banknote recognition device includes the invisible-feature detection device 10 in a transport unit configured to transport banknotes one by one. A sheet handling device typified by a banknote handling device may include a banknote recognition device provided with the invisible-feature detection device 10 in a transport unit coupled with a feeding unit configured to feed sheets one by one.

### INDUSTRIAL APPLICABILITY

As described hereinabove, the present invention provides a useful technique for detection of a serial number with an invisible feature.

## Claims

1. An invisible-feature detection device configured to detect an invisible feature of a serial number printed on a sheet, the invisible-feature detection device comprising:
a detection unit configured to detect the invisible feature from the sheet;
a memory unit configured to store a reference data set; and
a determination unit configured:
to compare a detected data set based on the invisible feature of the sheet detected by the detection unit with the reference data set; and
to determine that the serial number with the invisible feature is printed on the sheet when a difference is present between the detected data set and the reference data set in an area corresponding to a detection-target area of the sheet, the detection-target area including the serial number printed therein,
wherein the reference data set is based on a reference invisible feature detected from a reference sheet including a printed pattern at least excluding the serial number with the invisible feature.

2. An invisible-feature detection device according to claim 1,
wherein the invisible feature is an infrared absorption.

3. An invisible-feature detection device according to claim 1,
wherein the invisible feature is a fluorescence emission or a phosphorescence emission.

4. An invisible-feature detection device according to claim 1,
wherein the invisible feature is a magnetism.

5. An invisible-feature detection device according to any one of claims 1 to 4,
wherein the invisible feature is invisible under light within the visible light range, and
wherein the detection device has a detection range sensitive to the invisible feature.

6. An invisible-feature detection device according to any one of claims 1 to 5,
wherein the reference sheet includes the printed pattern with the reference invisible feature.

7. A sheet recognition device comprising the invisible-feature detection device according to any one of claims 1 to 6,
wherein the sheet recognition device is configured to recognize a sheet and determine the authenticity of the sheet based upon a determination result from the determination unit.

8. A sheet handling device comprising the sheet recognition device according to claim 7.

9. An invisible-feature detection device according to any one of claims 1 to 6,
wherein the sheet is an uncut sheet including a plurality of piece faces arranged thereon.

10. An invisible-feature detection device according to claim 9,
wherein the reference data set is a reference data set of a piece face of the plurality of piece faces.

11. An invisible-feature detection device according to claim 9 or 10,
wherein each piece face includes a plurality of serial numbers printed in a plurality of locations thereon, the plurality of serial numbers of each piece face being the same or different serial numbers, and
each piece face includes at least one detection-target area for areas each including the serial number printed therein within the uncut sheet.

12. The invisible-feature detection device according to claim 11,
wherein the plurality of piece faces includes different serial numbers, and
the plurality of serial numbers of each piece face are the same serial numbers.

13. An invisible-feature detection device according to any one of claims 9 to 11,
wherein the invisible feature of the serial number is detected on at least one of the piece faces.

14. A print inspection device comprising the invisible-feature detection device according to any one of claims 9 to 12,
wherein the print inspection device is configured to inspect whether or not a serial number is printed correctly on a sheet based upon a determination result from the determination unit.

15. An invisible-feature detection method of detecting an invisible feature of a serial number printed on a sheet, the method comprising:
preparing a reference data set based on a reference invisible feature detected from a reference sheet including a printed pattern at least excluding a serial number with the invisible feature;
detecting the invisible feature from the sheet; and
comparing a detected data set based on the invisible feature of the sheet detected by the detecting with the reference data set to determine that the serial number with the invisible feature is printed on the sheet when a difference is present between the reference data set and the detected data set in an area corresponding to a detection-target area of the sheet, the detection-target area including the serial number printed therein.
